# EUROPEAN PATENT SPECIFICATION

(11) **EP 0 427 323 B1**
(45) Date of publication and mention of the grant of the patent: **31.08.1994**
(21) Application number: 90202887.7
(22) Date of filing: 31.10.1990
(51) Int. Cl.: A23L 3/00, A23L 3/04

(54) **Method and device for feeding cans to a continuous sterilizer**
Verfahren und Vorrichtung zum Beschicken von Konservendosen zu einem kontinuierlichen Sterilisator
Procédé et appareil d'alimentation en boîte d'un stérilisateur continu

(30) Priority: 10.11.1989 NL 8902792
(43) Date of publication of application: 15.05.1991
(73) Proprietor: STORK AMSTERDAM B.V., 1021 JX Amsterdam (NL)
(72) Inventor: Hoppe, Johannes, NL-1141 CB Monnickendam (NL)
(74) Representative: Iemenschot, Johannes Andreas, Ir.

(56) References cited:
- FR-A- 1 156 389
- FR-A- 1 184 416
- FR-A- 1 550 703
- FR-A- 2 027 368
- FR-A- 2 080 738
- FR-A- 2 147 055
- FR-A- 2 200 156
- NL-A- 6 902 462
- US-A- 2 400 484

## Description

The invention relates to a method and device for feeding cans to a continuous sterilizer provided with a moving chain with can holders for guiding the cans through the sterilizer.

In a continuous sterilizer containers, in particular cans, filled with a product (e.g. a food product) are subjected to a heat treatment (sterilization, pasteurization), the cans being exposed to a certain temperature for a certain period of time. In a continuous sterilizer cans are fed to the sterilizer and removed from the sterilizer continuously. The cans are generally fed in groups to the sterilizer, and are placed in groups in the successive can holders of the sterilizer. Loading of the can holders can take place through a group or row of cans being placed in the lengthwise direction next to a can holder and then being slid into the can holder transversely to the lengthwise direction of the group or row. It is also possible to fill a can holder in the axial direction by sliding a group or row of cans from one end of the can holder in the axial direction into the can holder.

The whole heat treatment process, incl. the supply of the cans to be treated and the discharge of treated cans, is dictated by the speed of the conveyor system of the cans into the sterilizer, since the residence time in the sterilizer is the determining factor for the entire process. The cans must not in fact remain in the steriliser for too short a period, since complete sterilization or pasteurization of the contents thereof then does not take place, or too long either, since this adversely affects the quality of the contents of the cans.

In the case of continuous sterilisers it is important that can holders are filled in the optimum way with cans, in order to achieve maximum utilization of the capacity of the steriliser. This means that a joined-up group of cans with a predetermined number of cans per group must be present in each can holder. The number of cans per group must not be greater, in order to prevent the length of the group of cans from being greater than the length of the can holder, so that problems occur during filling of the can holders. The number of cans per group must not be smaller either, in order to prevent the can holders from not being completely filled. In addition, it is important for the space between successively infed groups of cans to be sufficient for placing each group of cans in a can holder. Finally, the groups of cans must be supplied in synchronism with the movement for placing the groups of cans in the can holders.

A problem here is that the cans come close together and in an upright position from a filling machine, at a slightly lower speed than the processing speed of the continuous steriliser. These cans have to be fed at the correct speed and in measured quantities to the continuous sterilizer, taken from the upright position to the horizontal position, and divided into groups with a required minimum space between the groups.

Another problem occurring in practice is the stopping of the cans supplied at high speed, just before or while they are being inserted into the can containers. During braking of the supplied cans against stationary stops the cans are stopped suddenly and the cans bump against each other. Since the cans are not complete energy-absorbing bodies, cans can be flung back. Completely joined-up groups of cans are not then formed, while cans can also end up lying askew which can lead to serious disruptions.

FR-A-2200156 discloses a method and apparatus for feeding cans to a continuous sterilizer provided with a moving chain with can holders for guiding the cans through the sterilizer. The cans are supplied in a horizontal position by a supply belt. The cans are retained periodically by a retaining device and thus divided into groups. These groups are then placed in succesive can holders of the sterilizer. With this known method and apparatus it is not ensured that always the required number of cans is placed in the can holders.

The object of the invention is to provide a solution to the above-mentioned problems.

This object is achieved according to the invention by a method for feeding cans to a continuous sterilizer provided with a moving chain with can holders for guiding the cans through the sterilizer, the cans being supplied in measured quantities according to the capacity of the sterilizer by a supply belt, retained periodically and thus divided into separate groups, the groups of cans being placed in succesion in the succesive can holders of the sterilizer, which method is characterized in that the cans are supplied in upright position, the cans supplied by the supply belt are periodically retained and subsequently counted out in a predetermined number by a retaining and counting device, the number of cans counted out per time unit being greater than the number of cans supplied per time unit, and the speed of the cans is reduced just before or during placing of the cans in the can holders.

With the method according to the invention groups of cans can be formed with great reliability with a predetermined number of cans per group, and with the correct interval between succesive groups, and it is ensured that always the correct predetermined number of cans is placed in a can holder of the sterilizer.

In order to be able to feed the groups of cans to the sterilizer at the correct moment, the cans are counted out and formed into groups in phase with the movement of the chain of the can holders.

The object of the invention is also achieved by a device for feeding cans to a continuous sterilizer provided with a moving chain with can holders for guiding the cans through the sterilizer, comprising a supply belt for the cans, in the region of the supply belt a retaining device for periodically retaining the cans supplied by the supply belt, and an insertion device for placing the cans in groups in the can holders, which device is characterized by a retaining and counting device disposed near the end of the supply belt and comprising a first turnstile for periodically retaining cans supplied by the supply belt and subsequently counting out a predetermined number of cans, and a sensor for determining the number of cans passed through the turnstile, the speed of rotation of the turnstile during counting out being such that the number of cans counted out per time unit is greater than the number of cans supplied per time unit, an intermediate belt disposed between the retaining and counting device and the insertion device for conveying groups of cans from the retaining and counting device to the insertion device, the insertion device comprising means for joining up the groups of cans to be placed in the can holders and means for varying the speed of the cans just before or during placing of the cans in the can holders.

Expedient and preferred embodiments of the device according to the invention are claimed in dependent claims 4 to 8.

The invention will now be explained in greater detail with reference to the description of an example of an embodiment shown in the drawing, in which:
Figure 1 shows in perspective and very schematically a continuous sterilizer;
Figure 2 shows in perspective the bottom part of a continuous sterilizer with a known device for feeding in and discharging cans;
Figure 3 shows schematically a device according to the invention when the can holders are filled in the transverse direction;
Figure 3a shows a slightly modified embodiment of the system for counting out cans;
Figure 3b shows a slightly modified embodiment of the means for joining up cans;
Figure 4 shows schematically a device according to the invention when the can holders are filled in the axial direction;
Figure 5 shows schematically a mechanism for driving a carrier element in the device of Figure 4.

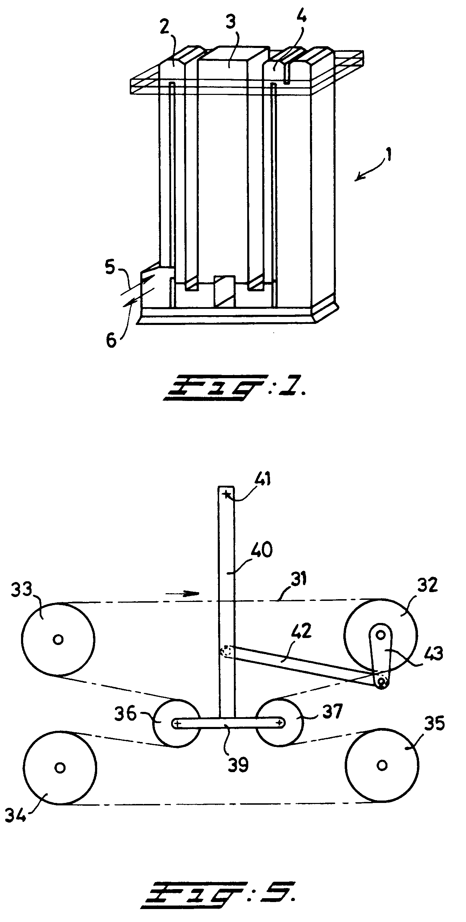

Figure 1 shows in perspective a continuous sterilizer 1 for sterilizing cans filled with a product (for example a food product). The steriliser comprises a number of towers 2, 3, 4 through which the cans are conveyed in the vertical direction. The cans are conveyed through the sterilizer 1 in can holders which are mounted between two endless conveyor chains. The cans to be sterilized are fed in by means of a can feed device 5, and the sterilized cans are discharged by means of a can discharge device 6.

A continuous sterilizer of the type shown in Figure 1 is generally known.

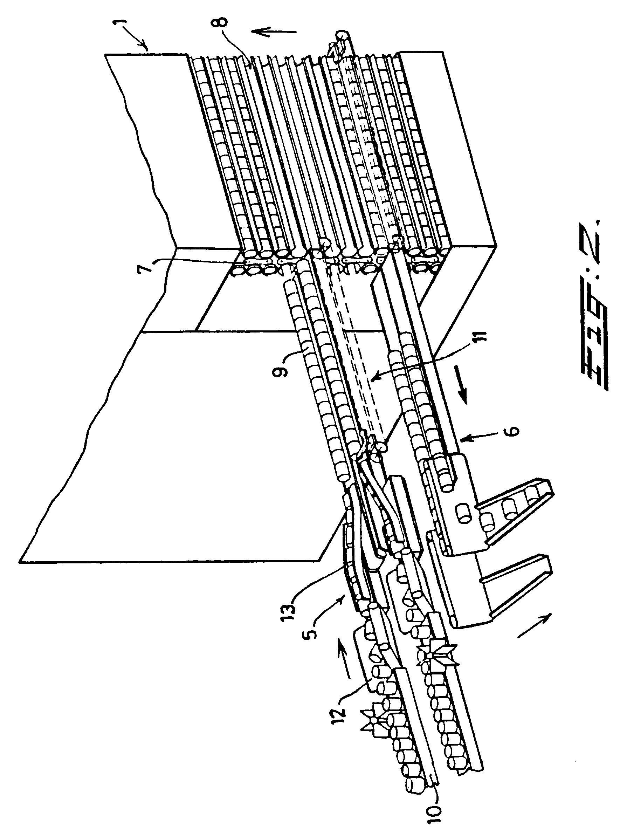

Figure 2 shows the bottom part of a continuous sterilizer 1 with a known can feed device 5 and can discharge device 6. Figure 2 also shows a part of one of the two endless conveyor chains 7 on which the can holders 8 are mounted on either side. The conveyor system shown here is a so-called double system. The cans 9 are in this case pushed in the axial direction into the can holders 8.

It is also possible to fix the can holders on one side to the conveyor chains. This is then described as a single system. The cans are then taken next to the can holders for filling of the can holders, and pushed into the can holders in the transverse direction.

The present invention relates to a can feed device 5 (see figure 2), which in general comprises a supply belt 10 for cans and an insertion device 11 for placing the cans 9 in groups in the can holders 8. Tilting means, such as a tilting belt 12, are also generally present to take the cans from the upright position on the supply belt 10 to the horizontal position, in order to be able to slide the cans in the horizontal position into the can holders 8. A chute 13 is also disposed downstream of the tilting belt 12.

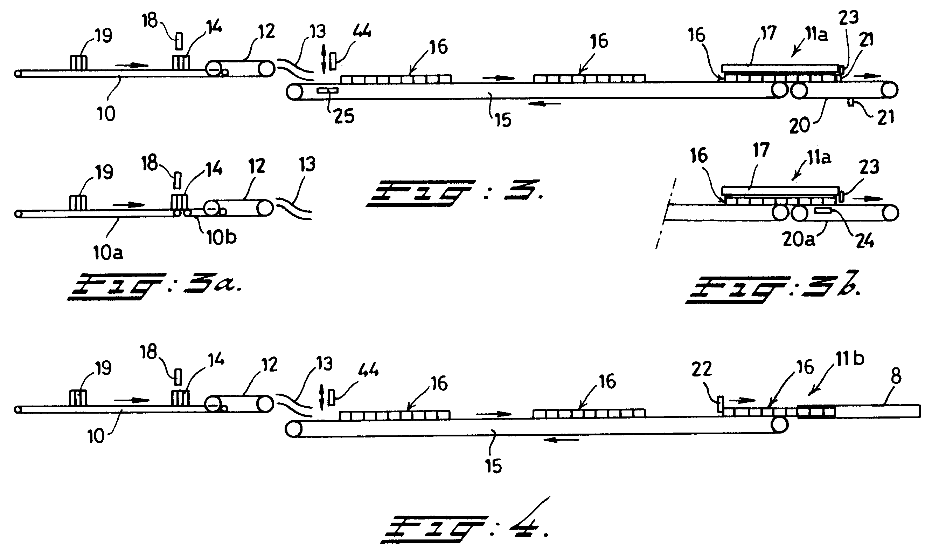

Figure 3 shows a first embodiment of the can feed device according to the invention. This can feed device comprises a counting device 14, 18, disposed near the end of the supply belt 10, for counting out repeatedly at intervals and forming into groups a predetermined number of cans, and an intermediate belt 15 disposed between the counting device 14, 18 and the insertion device 11a for conveying the groups of cans 16 from the counting device 14, 18 to the insertion device 11a. In addition, the can feed device, like the known device of Fig. 2, comprises a tilting belt 12 and a chute 13. The can feed device according to the invention also comprises means for joining up the groups of cans 16 to be placed in the can holders 8.

It is pointed out that the insertion device 11a shown in Figure 3 is designed for sliding the groups of cans in the transverse direction into the can holders. The insertion device 11a here comprises a so-called swivel beam 17 which slides a group of cans 16 into the can holder 8 transversely to the lengthwise direction of the group of cans.

The counting device in the embodiment of the device according to the invention described here comprises a turnstile 14, which is disposed near the end of the supply belt 10. This turnstile 14 serves to retain repeatedly at intervals the cans supplied by the supply belt 10 and subsequently to count out a predetermined number thereof, and is coupled by means of an overrunning clutch to the drive mechanism of the steriliser 1, thereby limiting the speed of rotation of the turnstile 14. The cans on the supply belt 10 make the turnstile 14 turn. The speed of the supply belt 10 is such that on the part of the supply belt 10 between the turnstile 14 and the tilting belt 12 the cans counted out by the turnstile 14 are at distance from one another, so that on the tilting belt 12 each can will be tilted without touching other cans on the tilting belt. The turnstile 14 is blocked by a brake (not shown) and retains the supplied cans until a signal is received from the drive mechanism of the sterilizer 1 to release the turnstile. In the case of a normal supply of cans, each turnstile position will contain one can. The number of cans which have passed through can be counted by counting the number of passages of a bar of the turnstile by means of a sensor 18. When the desired number of cans has passed, the turnstile is stopped again. In this way, groups of cans which have the desired number of cans can always be counted out.

Figure 3 also shows a second turnstile 19 disposed next to the supply belt 10. This turnstile 19 ensures a supply of cans in measured quantities. The turnstile 19 is also coupled by means of an overrunning clutch to the drive mechanism of the sterilizer, as a result of which the speed of rotation of the turnstile 19 is also limited. The turnstile 19 in this way allows cans through in measured quantities according to the capacity of the sterilizer.

The speed of rotation of the turnstile 14 is greater that the speed of rotation of the turnstile 19, so that, despite the fact that the turnstile 14 stops briefly at intervals, no blockages of cans occur on the supply belt 10. For example, if n is the number of cans processed by the sterilizer per unit time, the number of cans allowed through by the turnstile 19 per unit time is also n, and the number of cans allowed through by the turnstile 14 during rotation is 1.5 n. In this case, the speed of the supply belt will be approximately 2 n d, d being the diameter of the cans.

Figure 3a shows a slightly modified embodiment of the system for counting out cans. In this embodiment the overrunning clutch between the turnstile 14 and the drive mechanism of the sterilizer is left out. The turnstile 14 is then freely rotatable. Like in the embodiment of Figure 3, the turnstile 14 is rotated by the cans on the supply belt, but the speed of rotation of the turnstile 14 is not limited. In order to ensure that the part of the supply belt between the turnstile 14 and the tilting belt 12 the cans counted out by the turnstile are at distance from one another, in the embodiment of Figure 3a the supply belt is divided into two parts 10a and 10b. The part 10b of the supply belt between the turnstile 14 and the tilting belt 12 runs with a higher speed than the part 10a of the supply belt upstream of the turnstile 14. For example, the part 10b runs with the same speed (of approximately 2 n d), as the supply belt 10 of Figure 4, whereas the part 10a runs with a speed of 1.5 n d. The parts 10a and 10b of the supply belt are both coupled to the drive mechanism of the sterilizer, each via its own adjustable transmission.

Like in the embodiment of Figure 3, the turnstile 19 can be coupled by means of an overrunning clutch to the drive mechanism of the sterilizer. However, in both embodiments it is also possible to provide the turnstile 19 with its own drive, which in that case must be synchronized with the drive mechanism of the sterilizer.

The insertion device for placing the groups of cans in the can holders can be designed in different ways, depending on the way in which the cans are placed in the can holders. The groups of cans 16 can in fact, as already mentioned, be placed in the can holders in a direction at right angles to the lengthwise direction of the can groups 16 and the can holders 8 (as in Figure 3) or in the axial direction of the can groups 16 and the can holders 8 (as in Figures 2 and 4).

In the first case (Figure 3) the cans are first brought to a standstill and thereafter slid, at right angles to the earlier direction of conveyance, into the can holders 8 by the swivel beam 17. It is important here that the cans should lie against one another, so that optimum use can be made of the capacity of the can holders. Since the cans which are counted out by the turnstile 14 do not lie against one another, an end belt 20 is disposed downstream of the intermediate belt 15. The end belt 20 is designed to move at a lower speed than the intermediate belt 15. The speed of the end belt 20 is for example half that of the intermediate belt 15. The end belt 20 is provided with at least one retaining element 21 for retaining the cans placed on the end belt 20 by the intermediate belt 15. In the embodiment shown in Figure 3 the end belt 20 has two such retaining elements 21 lying at a distance from each other which is equal to half the belt length. The movements of the intermediate belt 15, the end belt 20 and the turnstile 14 are interconnected in such a way that a retaining element 21 "comes up" when a first can from a group of cans 16 lying on the intermediate belt 15 is placed on the end belt 20. Since the end belt 20 is running at a lower speed than the intermediate belt 15, the group of cans 16 placed on the end belt 20 by the intermediate belt 15 will be retained by the retaining element 21, and the cans of the group concerned will be pushed against one another. In this way a joined-up group of cans 16 is formed, the speed of which is reduced in steps, not of the group as a whole but per can of the group. This prevents great collisions.

When the retaining element 21 is in the position shown in Figure 3, a joined-up group of cans is formed with the correct number of cans per group. A fixed end stop 23 ensures that in this situation the group of cans is in the proper position with respect to a can holder (not shown here). The group of cans can then be pushed into a can holder at right angles to the direction of movement by the swivel beam 17. As already mentioned above, the movements of the intermediate belt 15, the end belt 20 and the turnstile 14 are interconnected. These movements are in turn coupled to the movement of the chain with can holders 8 of the sterilizer 1, in such a way that the moment a joined-up group of cans 16 is formed a can holder is next to the intermediate belt 15 and the end belt 20, and is ready to take a groups of cans.

Figure 3b shows a slightly modified embodiment of the means for joining up the cans. This embodiment has an end belt 20a without a retaining element. The cans are retained on the end belt 20a by the friction force between the cans and the end belt. To increase this friction force a magnet 24 can be placed under the upper part of the end belt 20a. By means of this magnet the force exerted by the cans on the end belt 20a is increased. The fixed end stop 23 ensures that a joined-up group of cans 16 will be positioned properly with respect to a can holder.

It is noted that also under the upper part of the intermediate belt 15, in the region where cans coming from the chute fall on the intermediate belt 15, a magnet 25 can be provided for increasing the friction force between the cans and the belt. In this way the cans coming from the chute 13 will have the speed of the intermediate belt 15 in very short time.

If the groups of cans are pushed in the axial direction into the can holders, the insertion device is different. As shown schematically in Figure 4, the insertion device 11b then comprise a carrier element 22 which is movable along the intermediate belt 15. In this case also, the movements of the intermediate belt 15, the turnstile 14 and the carrier element 22 are interconnected and are connected to the movement of the chain with can holders 8 of the sterilizer 1, in such a way that when a group of cans 16 is formed on the intermediate belt 15, a can holder 8 is lying directly in line with this group of cans 16. The carrier element 22 can then slide the group of cans 16 from the intermediate belt 15 into the can holder 8. The speed at which the carrier element 22 moves is not constant during the movement. The speed of the carrier element 22 is at first lower than the speed of the intermediate belt 15, and then equal to it, higher, equal to, and again lower than the speed of the intermediate belt 15. The cans on the intermediate belt 15 are consequently pushed at first gradually against each other on the belt to form a joined-up group, and while the cans are being slid into the can holder 8 they are braked by the can holder 8 through the fact that the cans are subjected to friction from the wall of the can holder 8. In this way, the cans are in the end placed at a relatively low end speed in the can holder 8, thus minimizing collisions.

The variable speed of the carrier element 22 can be achieved with the drive system shown schematically in Figure 5. This system comprises a chain 31 which is guided over a number of rollers 32 to 37. The rollers 32 to 35 have a fixed shaft, while the shafts of the rollers 36 and 37 are fixed on a frame 39 which can move to and fro. The roller 32 drives the chain 31, the drive of the roller 32 being coupled to the drive of the sterilizer. The carrier element 22 is driven by means of the roller 34, whose speed of rotation can be varied by the to and fro movement of the frame 39 with the rollers 36 and 37. The to and fro movement of the frame 39 is obtained by a swinging movement of a rod fixed to the frame 39 about a point of rotation 41, and is coupled to the drive of the roller 32 by means of a crank 42 and a rod 43. The movement of the frame 39 with rollers 36 and 37 takes place in phase with the movement of the can holders in the sterilizer.

The device according to the invention is preferably also provided with a system which in the event of a stoppage through e.g. a fault again synchronizes the movement of the groups of cans with the movement of the can holders into the sterilizer.

If a fault occurs in the plant and the plant is brought to a standstill, the intermediate belt 15 is also brought to a standstill. If at that moment the first can of a group has already arrived on the intermediate belt 15, then the group of cans concerned is still in phase with the can holders, and when the plant is started up again no problem will arise with the phasing. However, if at the moment of stopping a certain number of cans of a group has already passed the counting turnstile 14, but has not yet reached the intermediate belt 15, e.g. through the fact that they are still on the tilting belt 12 or in the chute 13, these cans will reach the intermediate belt 15 out of phase.

When the plant is started up again after a stoppage, it is therefore ensured that such a group of cans is brought into phase again by retaining this group with a pneumatically operated stop 44 moving in the path of the cans (see Figures 3 and 4) and releasing this group in phase again after restarting of the plant. The time of release is related to the movement of the insertion device.

With the aid of the device according to the invention, during operation of the plant a predetermined number of cans from the supplied cans is counted out repeatedly and formed into a group. The groups of cans thus formed are placed in the successive can holders of the sterilizer after being joined up. The cans are counted out and formed into groups in phase with the movement of the chain with the can holders and the insertion device. Just before they are placed in the can holders, the speed of movement of the cans is reduced.

In this way it is ensured that the sterilizer has an optimum degree of filling, through a maximum number of cans lying against each other always being placed in each can holder. Besides, due to the fact that the speed of the cans is reduced, the chance of faults occurring in the plant is reduced considerably.

A method and device for feeding in cans to a sterilizer is described above. It will be clear that the invention need not be restricted thereto. Other similar objects such as (glass) jars with lids can be fed in a similar manner to a continuous sterilizer.

## Claims

1. Method for feeding cans to a continuous sterilizer (1) provided with a moving chain with can holders (8) for guiding the cans through the sterilizer, the cans (9) being supplied in measured quantities according to the capacity of the sterilizer by a supply belt (10) , retained periodically and thus divided into separate groups (16), the groups of cans being placed in succession in the successive can holders of the sterilizer, **characterized in that** the cans (9) are supplied in upright position, the cans (9) supplied by the supply belt (10) are periodically retained and subsequently counted out in a predetermined number by a retaining and counting device (14, 18), the number of cans counted out per time unit being greater than the number of cans supplied per time unit, and the speed of the cans (9) is reduced just before or during placing of the cans in the can holders (8).

2. Method according to claim 1, **characterized in that** the cans (9) are counted out and divided into groups (16) in phase with the movement of the chain with the can holders (8).

3. Device for feeding cans to a continuous sterilizer provided with a moving chain with can holders (8) for guiding cans through the steriliser (1), comprising a supply belt (10) for the cans, in the region of the supply belt a retaining device for periodically retaining the cans (9) supplied by the supply belt, and an insertion device (11a, 11b) for placing the cans in groups in the can holders (8), **characterized by** a retaining and counting device (14, 18) disposed near the end of the supply belt (10) and comprising a first turnstile (14) for periodically retaining cans supplied by the supply belt and subsequently counting out a predetermined number of cans, and a sensor (18) for determining the number of cans passed through the turnstile (14), the speed of rotation of the turnstile (14) during counting out being such that the number of cans counted out per time unit is greater than the number of cans supplied per time unit, an intermediate belt (15) disposed between the retaining and counting device (14, 18) and the insertion device (11a, 11b) for conveying groups of cans (16) from the retaining and counting device (14, 18) to the insertion device, the insertion device (11a, 11b) comprising means for joining up the groups of cans (16) to be placed in the can holders (8) and means for varying the speed of the cans just before or during placing of the cans in the can holders (8).

4. Device according to claim 3, **characterized in that** the insertion device (11a) comprises an end belt (20; 20a) which is disposed downstream of the intermediate belt (15) and is designed to move at a lower speed than the intermediate belt and to retain cans placed by the intermediate belt (15) on the end belt (20, 20a).

5. Device according to claim 4, **characterized in that** the end belt (20) is provided with at least one retaining element (21) or that a magnet (24) is placed under the upper part of the end belt (20a).

6. Device according to claim 3, **characterized in that** the insertion device (11b) comprises a carrier element (22) which is movable along the intermediate belt (15) and is designed for sliding groups of cans (16) lying on the intermediate belt into the can holders (8) of the sterilizer (1).

7. Device according to claim 6, **characterized in that** means are provided for varying the speed of the carrier element (22), these means being designed such that the speed of the carrier element (22) when the cans are being slid into the can holders (8) is first lower than, then equal to, greater than, equal to, and again lower than the speed of the intermediate belt (15).

8. Device according to anyone of claims 3 to 7, **characterized in that** a second turnstile (19) is disposed next to the supply belt (10) for allowing through cans continuously and in measured quantities corresponding to the capacity of the sterilizer (1).

## Patentansprüche

1. Verfahren zum Beschicken eines kontinuierlich arbeitenden Sterilisators (1) mit Dosen, welcher versehen ist mit einer Förderkette, die Dosenhalter (8) zum Führen der Dosen durch den Sterilisator aufweist, wobei die Dosen (9) in Abhängigkeit von der Kapazität des Sterilisators in abgemessenen Mengen von einem Förderband (10) zugeführt, regelmäßig zurückgehalten und dadurch in separate Gruppen (16) aufgeteilt werden, wobei diese Dosengruppen der Reihe nach in aufeinanderfolgende Dosenhalter des Sterilisators angeordnet werden,
**dadurch gekennzeichnet**, daß die Dosen (9) in aufrechter Lage zugeführt werden, die von dem Förderband zugeführten Dosen (9) regelmäßig zurückgehalten und anschließend mittels einer Rückhalte- und Zählvorrichtung (11, 18) in einer vorbestimmten Anzahl abgezählt werden, wobei die pro Zeiteinheit abgezählte Dosenanzahl größer ist als die pro Zeiteinheit zugeführte Dosenanzahl und die Geschwindigkeit der Dosen (9) genau bevor oder während die Dosen in den Dosenhalter (8) angeordnet werden verringert wird.

2. Verfahren gemäß Anspruch 1,
**dadurch gekennzeichnet**, daß die Dosen (9) in Phase mit der Bewegung der Kette mit den Dosenhaltern (8) abgezählt und in Gruppen (16) aufgeteilt werden.

3. Vorrichtung zum Beschicken eines kontinuierlich arbeitenden Sterilisators mit Dosen, welcher versehen ist mit einer Förderkette, die Dosenhalter (8) zum Führen der Dosen durch den Sterilisator aufweist, mit einem Förderband (10) für die Dosen, einer Rückhaltevorrichtung in dem Bereich des Förderbandes zum regelmäßigen Zurückhalten der von dem Förderband zugeführten Dosen und mit einer Einführungsvorrichtung (11a, 11b) zum Anordnen der Dosen in Gruppen in den Dosenhaltern (8),
**gekennzeichnet durch** eine in der Nähe des Förderbandes (10) angebrachten Rückhalte- und Zählvorrichtung (14, 18) mit einem ersten Drehkreuz (14) zum regelmäßigen Zurückhalten der von dem Förderband zugeführten Dosen und anschließendem Abzählen einer vorbestimmten Anzahl Dosen und mit einem Sensor (18) zum Erfassen der Anzahl der das Drehkreuz durchlaufenden Dosen (14), wobei während des Abzählvorgangs die Rotationsgeschwindigkeit des Drehkreuzes (14) derart ist, daß die pro Zeiteinheit abgezählte Dosenanzahl größer ist als die pro Zeiteinheit zugeführte Dosenanzahl, zwischen der Rückhalte- und Abzählvorrichtung (14, 18) und der Einführungsvorrichtung (11a, 11b) ein Zwischenband (15) eingefügt ist zum Fördern von aus Dosen bestehenden Gruppen (16) von der Rückhalte- und Abzählvorrichtung (14,18) zur Einführungsvorrichtung, wobei die Einführungsvorrichtung (11a, 11b) Mittel aufweist zum Zusammenschließen der Dosengruppen (16), die in den Dosenhaltern (8) angeordnet werden, und Mittel enthält zum Verändern der Geschwindigkeit der Dosen genau bevor oder während die Dosen in den Dosenhaltern (8) angeordnet werden.

4. Vorrichtung gemäß Anspruch 3,
**dadurch gekennzeichnet**, daß die Einführungsvorrichtung (11a) ein Endband (20; 20a) enthält, welches stromabwärts vom Zwischenband (15) angeordnet und so beschaffen ist, daß es sich mit einer geringeren Geschwindigkeit als das Zwischenband bewegt und von dem Zwischenband (15) auf dem Endband (20, 20a) angeordnete Dosen zurückhält.

5. Vorrichtung gemäß Anspruch 4,
**dadurch gekennzeichnet**, daß das Endband (20) mit mindestens einem Rückhalteelement (21) versehen ist oder daß unterhalb des oberen Teils des Endbandes (20a) ein Magnet (24) angeordnet ist.

6. Vorrichtung nach Anspruch 3,
**dadurch gekennzeichnet**, daß die Einführungsvorrichtung (11b) ein Trägerelement (22) aufweist, welches entlang des Zwischenbandes (15) bewegbar und so beschaffen ist, daß es die auf dem Zwischenband liegenden Dosengruppen (16) in die Dosenhalter (8) des Sterilisators (1) schiebt.

7. Vorrichtung gemß Anspruch 6,
**dadurch gekennzeichnet**, daß Mittel vorgesehen sind zur Änderung der Geschwindigkeit des Trägerelements (22), wobei die Mittel derart beschaffen sind, daß die Geschwindigkeit des Trägerelements (22), wenn die Dosen in die Dosenhalter (8) geschoben werden, zuerst geringer ist, anschließend gleich, größer als, gleich und wieder geringer ist als die Geschwindigkeit des Zwischenbandes (15).

8. Vorrichtung gemäß einem der Ansprüche 3 bis 7,
**dadurch gekennzeichnet**, daß neben dem Förderband (10) ein zweites Drehkreuz (19) angeordnet ist, um kontinuierlich Dosen in Mengen durchzulassen, die der Kapazität des Sterilisators (1) entsprechen.

## Revendications

1. Procédé d'alimentation en boîtes d'un stérilisateur continu (1) équipé d'une chaîne mobile comportant des porte-boîtes (8) pour guider les boîtes à travers le stérilisateur, les boîtes (9) étant amenées en quantités mesurées en fonction de la capacité du stérilisateur par une courroie d'alimentation (10), retenues périodiquement et ainsi divisées en groupes séparés (16), les groupes de boîtes étant placés successivement dans les porte-boîtes successifs du stérilisateur, caractérisé en ce que les boîtes (9) sont amenées en position verticale, les boîtes (9) amenées par la courroie d'alimentation (10) sont périodiquement retenues puis comptées en un nombre prédéterminé par un dispositif de retenue et de comptage (14,18), le nombre de boîtes comptées par unité de temps étant plus grand que le nombre de boîtes amenées par unité de temps, et en ce que la vitesse des boîtes (9) est réduite juste avant ou pendant l'introduction des boîtes dans les porte-boîtes (8).

2. Procédé suivant la revendication 1, caractérisé en ce que les boîtes (9) sont comptées et divisées en groupes (16) en phase avec le mouvement de la chaîne comportant les porte-boîtes (8).

3. Appareil pour l'alimentation en boîtes d'un stérilisateur continu équipé d'une chaîne mobile comportant des porte-boîtes (8) pour guider les boîtes à travers le stérilisateur (1), comprenant une courroie d'alimentation (10) pour les boîtes, un dispositif de retenue dans la région de la courroie d'alimentation pour retenir périodiquement les boîtes (9) amenées par la courroie d'alimentation, et un dispositif d'insertion (11a,11b) pour placer les boîtes en groupes dans les porte-boîtes (8), caractérisé en ce qu'il comprend un dispositif de retenue et de comptage (14,18) placé près de l'extrémité de la courroie d'alimentation (10) et comprenant un premier tourniquet (14), pour retenir périodiquement les boîtes amenées par la courroie d'alimentation et compter ensuite un nombre prédéterminé de boîtes, et un capteur (18) pour déterminer le nombre de boîtes qui ont franchi le tourniquet (14), la vitesse de rotation du tourniquet (14) pendant le comptage étant telle que le nombre de boîtes comptées par unité de temps est plus grand que le nombre de boîtes amenées par unité de temps, une courroie intermédiaire (15)étant disposée entre le dispositif de retenue et de comptage (14,18) et le dispositif d'insertion (11a,11b) pour transporter les groupes de boîtes (16) du dispositif de retenue et de comptage(14,18) au dispositif d'insertion, le dispositif d'insertion (11a,11b) comprenant des moyens pour rassembler les groupes de boîtes (16) à placer dans les porte-boîtes (8) et des moyens de modification de la vitesse des boîtes juste avant ou pendant l'introduction des boîtes dans les porte-boîtes (8).

4. Appareil suivant la revendication 3, caractérisé en ce que le dispositif d'insertion (11a) comprend une courroie terminale (20,20a) qui est placée en aval de la courroie intermédiaire (15) et qui est prévue pour se déplacer à une vitesse plus faible que celle de la courroie intermédiaire et pour retenir les boîtes placées par la courroie intermédiaire (15) sur la courroie terminale (20, 20a).

5. Appareil suivant la revendication 4, caractérisé en ce que la courroie terminale (20) comporte au moins un élément de retenue (21) ou en ce qu'un aimant (24) est placé sous la partie supérieure de la courroie terminale (20a).

6. Appareil suivant la revendication 3, caractérisé en ce que le dispositif d'insertion (11b) comprend un élément porteur (22) qui est déplaçable le long de la courroie intermédiaire (15) et est prévu pour faire glisser les groupes de boîtes (16) se trouvant sur la courroie intermédiaire et les introduire dans les porte-boîtes (8) du stérilisateur (1).

7. Dispositif suivant la revendication 6, caractérisé en ce que des moyens sont prévus pour faire varier la vitesse de l'élément porteur (22), ces moyens étant conçus de sorte que la vitesse de l'élément porteur (22), lorsqu'il fait glisser les boîtes pour les introduire dans les porte-boîtes (8), est d'abord inférieure puis égale, supérieure, égale et à nouveau inférieure à la vitesse de la courroie intermédiaire (15).

8. Appareil suivant une quelconque des revendications 3 à 7, caractérisé en ce qu'un deuxième tourniquet (19) est placé près de la courroie d'alimentation (10) pour permettre le passage de boîtes continuellement et en quantités mesurées correspondant à la capacité du stérilisateur (1).
